# EUROPEAN PATENT APPLICATION

(11) **EP 4 461 677 A1**
(43) Date of publication of application: **13.11.2024**
(21) Application number: 23766800.9
(22) Date of filing: 06.03.2023
(51) Int. Cl.: B65G 43/08, B65G 15/08, B65G 43/02

(54) **BELT CONVEYANCE STATE DETECTION DEVICE AND BELT CONVEYANCE STATE DETECTION METHOD**

(30) Priority: 07.03.2022 JP 2022034560
(71) Applicant: JFE Steel Corporation, Tokyo 100-0011 (JP)
(72) Inventor: ISHIGAKI Yusuke, Tokyo 100-0011 (JP); NISHINA Yoshiaki, Tokyo 100-0011 (JP)
(74) Representative: Grünecker Patent- und Rechtsanwälte PartG mbB
(86) International application number: PCT/JP2023/008372
(87) International publication number: WO 2023/171624

(57) **Abstract**

The conveyance state of a conveyance article conveyed by a belt is determined easily and accurately. A belt conveyance state detection device (9) for detecting a conveyance state of a belt (3) of a belt conveyor (1) configured to convey a conveyance article includes: an end position detector (10) configured to detect respective width-direction positions of both ends of the belt (3) in a width direction in a top view; an apparent width calculator (12) configured to calculate an apparent width (WX) as a width of the belt (3) in the top view, based on the width-direction positions detected by the end position detector (10); and a state detector (13) configured to determine a conveyance state of the conveyance article conveyed by the belt (3), based on the calculated apparent width (WX).

## Description

### Technical Field

The present invention relates to a technology to detect a conveyance abnormality of a belt of a belt conveyor by determining the conveyance state of a conveyance article conveyed by the belt.

### Background Art

Iron ores or coal as a main material, limestone as an auxiliary material, and the like which are necessary for an iron manufacture process are stored in a raw-material yard. The iron ores and the like are supplied to a subsequent step in a sinter plant, a cokes factory, a blast furnace, or the like as needed. In the raw-material yard, raw materials of different types or different brands are conveyed by multiple belt conveyors.

A belt conveyor conveys a raw material by rotating an endless belt. However, the belt conveyor may have a conveyance abnormality in the belt due to an uneven loading state of the raw material, poor alignment of a pulley suspending the belt, or the like.

When the belt has a conveyance abnormality, the raw material might fall from the belt during the conveyance so that the raw material might accumulate in an unexpected place. Further, when the belt has a conveyance abnormality, the belt might be worn out or damaged. This might cause a serious trouble leading to a facility stop.

In order to stably operate a belt conveyor facility, it is necessary to monitor the belt appropriately while the belt is conveying a conveyance article. The monitoring is performed by detecting the conveyance state of the belt, for example.

As a method for monitoring a belt of a belt conveyor, methods described in PTLS 1 to 3 have been proposed, for example.

In PTL 1, deviation of a belt in its width direction is detected by a limit switch. PTL 1 discloses that the occurrence of a conveyance abnormality related to meandering of the belt is monitored.

PTL 2 discloses that meandering of a belt is detected by detecting an edge position of the belt by a transmissive photoelectric sensor.

Further, PTL 3 discloses that the amount of meandering is determined consecutively based on a deviation between the center of a belt in its width direction in a captured image of the belt and the center of a line in the width direction.

### Citation List

### Patent Literature

PTL 1: JP 2012-6703 A
PTL 2: JP 2021-162515 A
PTL 3: JP 2018-115054 A

### Summary of Invention

### Technical Problem

The methods described in PTLS are intended to detect meandering. Accordingly, the methods described in PTLS cannot detect a conveyance abnormality such as falling of a raw material from a belt during conveyance. In addition, the methods described in PTLS cannot detect a conveyance abnormality of a belt due to poor transfer of a raw material to the belt, or the like. More specifically, the methods described in PTLS 1 to 3 might not be able to grasp the presence or absence of a conveyance article on the belt.

Further, in a powder dust environment such as the raw-material yard, there is such a possibility that powder dust accumulates markedly in a light projection section or a light receiving section of a photoelectric sensor. On this account, in the method described in PTL 1 or PTL 2, false detection might increase in the powder dust environment.

Further, in the method described in PTL 3, it is necessary to visually observe a captured image via a monitor to grasp the presence or absence of a conveyance article. On this account, in the method described in PTL 3, conveyance abnormalities of multiple conveyers cannot be automatically monitored effectively.

The present invention is accomplished in view of the above problems, and an object of the present invention is to easily and accurately determine the conveyance state of a conveyance article conveyed by a belt.

### Solution to Problem

In order to achieve the object, one aspect of the present invention relates to a belt conveyance state detection device for detecting a conveyance state of a belt of a belt conveyor configured to convey a conveyance article. The belt conveyance state detection device includes: an end position detector configured to detect respective width-direction positions of both ends of the belt in a width direction in a top view; an apparent width calculator configured to calculate an apparent width as a width of the belt in the top view, based on the width-direction positions detected by the end position detector; and a state detector configured to determine a conveyance state of the conveyance article conveyed by the belt, based on the calculated apparent width.

Further, an aspect of the present invention relates to a belt conveyance state detection method for detecting a conveyance state of a belt of a belt conveyor configured to convey a conveyance article. The belt conveyance state detection method includes determining a conveyance state of a conveyance article conveyed by the belt, based on a length of an apparent width as a width of the belt viewed in a top view relative to an actual length of the width of the belt.

### Advantageous Effects of Invention

With the aspects of the present invention, it is possible to easily and accurately determine the conveyance state of the conveyance article conveyed by the belt, based on the change in the apparent width of the belt. The conveyance state of the conveyance article conveyed by the belt varies depending on the presence or absence of the conveyance article on the belt, or the like.

As a result, with the aspects of the present invention, it is possible to take measures such as changing of an operation condition or inspection or repair of a facility before a large facility trouble occurs.

### Brief Description of Drawings

FIG. 1 is a diagrammatic view illustrating an exemplary configuration of a belt misalignment detection device according to an embodiment of the present invention;
FIG. 2 is a sectional view illustrating the relationship between a belt and a roller;
FIGS. 3A to 3C are views to describe the apparent width of the belt, FIG. 3A being a sectional view illustrating an actual length, FIG. 3B being a belt sectional view in a state where no raw material is put on the belt, FIG. 3C being a belt sectional view in a state where a raw material is put on the belt;
FIG. 4 is a view illustrating the configuration of a detection device according to an embodiment based on the present invention;
FIG. 5A is a view illustrating an example of a captured image, and FIG. 5B is a view illustrating an image after projective transformation;
FIG. 6 is a view illustrating an example of learning data; and
FIG. 7 is a schematic view illustrating a learning model example.

### Description of Embodiments

The following will describe an embodiment of the present invention with reference to the drawings.

The present embodiment relates to a technology about a belt conveyor for conveying a raw material (a conveyance article) such as iron ores or coal in an iron manufacture process. The present embodiment deals with a case where a belt of a belt conveyor is monitored by detecting the conveyance state of the belt, as an example. The present invention is applicable to a configuration in which a raw material or other conveyance articles are conveyed by a belt conveyor. The present invention is a technology that is suitable particularly for a case where the environment in which a movable belt is disposed changes. The case where the environment changes indicate, for example, a case where at least part of the belt is disposed outdoors. The present invention is useful for monitoring of an abnormality in the conveyance state of a belt in a belt conveyor facility for conveying a raw material as particulate matter of iron ores, coal, or the like.

### (Overall Configuration)

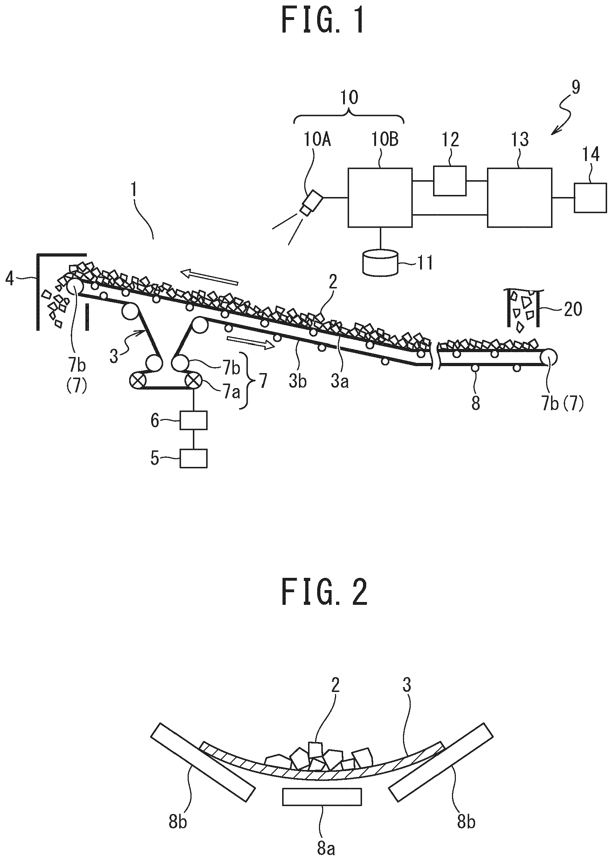

FIG. 1 is a diagrammatic view illustrating the configuration of a belt conveyor 1 and an exemplary configuration of a conveyance state detection device 9 for a belt 3 according to the present embodiment.

### <Belt Conveyor 1>

The belt conveyor 1 includes an endless belt 3 and a pulley 7. The belt 3 moves over a plurality of rollers 8 with a predetermined tension in response to the rotation of the pulley 7 constituted by a drive pulley 7a and a plurality of driven pulleys 7b. The drive pulley 7a is rotationally driven by an electric machine 5 via a speed reducer 6.

In the present embodiment, a roller supporting an upper belt 3a among the rollers 8 consists of a combination of a central roller 8a and right and left rollers 8b, as illustrated in FIG. 2. The central roller 8a is disposed in a width-direction center in a belt width direction (the right-left direction in FIG. 2). The right and left rollers 8b are disposed on the right side and the left side of the central roller 8a such that the axes of the rollers are inclined. Hereby, the rollers supporting the upper belt 3a can support the upper belt 3a in a trapezoidal shape. Note that the rollers 8 supporting a lower belt 3b side are each constituted by one roller. Note that the support configuration for the belt 3 by the rollers 8 is not limited to this.

Further, in the present embodiment, a raw material input device 20 is disposed on the upstream side from the upper belt 3a in a conveyance direction. A raw material 2 as a conveyance article is loaded on the belt 3 from the raw material input device 20. The raw material 2 thus transferred is conveyed by the upper belt 3a. Then, the raw material 2 is conveyed by the upper belt 3a to the downstream side in the conveyance direction and is sequentially put into a chute 4.

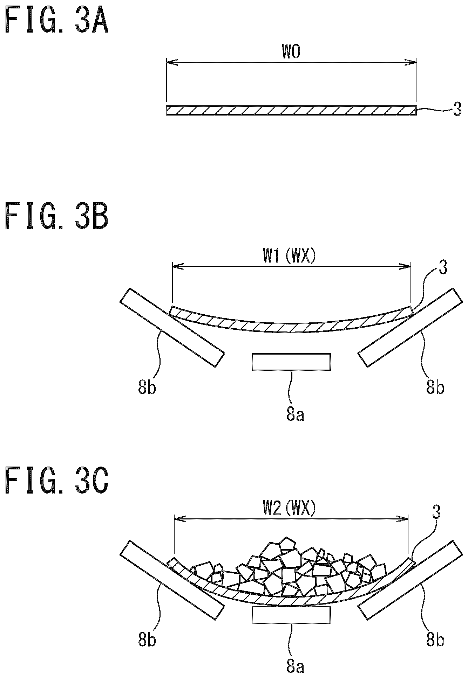

Here, in a state where no raw material 2 is loaded on the belt 3 as illustrated in FIG. 3B, the belt 3 is in the following state depending on the tension of the belt 3. That is, in an unloading state, a belt width W1 in a top view has a length close to an actual length WO (FIG. 3A) of the width of the belt 3. Further, in a state where a predetermined amount of the raw material 2 is loaded on the belt 3 as illustrated in FIG. 3C, the belt 3 is in the following state. That is, in a loading state, a belt width W2 in a top view is shorter in length than the belt width W1 in a state where no raw material 2 is loaded on the belt 3.

Here, the belt width in a top view is referred to as an apparent width WX of the belt 3.

Further, a "top view" in the present specification indicates a case where the upper surface of the upper belt 3a is viewed from above and may not necessarily indicate a case where the upper belt 3a is viewed from right above.

### <Detection Device 9>

The conveyance state detection device 9 for the belt 3 is a device configured to determine the conveyance state of a conveyance article by the belt 3.

As illustrated in FIG. 1, the detection device 9 includes an end position detector 10, an apparent width calculator 12, a state detector 13, and a notifier 14.

### <End Position Detector 10>

The end position detector 10 performs a process of detecting respective width-direction positions of both ends of the upper belt 3a in the width direction in a top view.

The end position detector 10 of the present embodiment includes an imaging device and an image processor 10B.

### [Imaging Device]

The imaging device includes a visible camera 10A such as a CCD camera. The camera 10A takes an image of the moving upper belt 3a from above.

The camera 10A is provided to be able to take an image of the belt 3 conveying the raw material 2, from above. The camera 10A is provided above a given position on the belt 3 on a conveyance path of the raw material 2 from the raw material input device 20 to the chute 4, for example. The camera 10A takes an image of the moving belt 3. Note that one camera 10A is illustrated in FIG. 1. Two or more cameras 10A may be disposed along the moving direction of the belt 3 (the conveyance direction of the raw material 2) .

In the present embodiment, the camera 10A is provided such that its imaging direction is inclined toward the downstream side in the conveyance direction. Hereby, the camera 10A can take an oblique-view image of the belt 3.

### [Image Processor 10B]

The image processor 10B acquires captured images taken by the camera 10A at preset sampling intervals. The image processor 10B performs image processing on the acquired captured images. The image processor 10B sequentially stores the acquired captured images in a database 11. The image processor 10B may sequentially perform image processing on each of the captured images stored in the database 11.

The image processor 10B performs a process of detecting the width-direction positions of both ends of the belt 3 in the width direction from a captured image taken by the camera 10A as the image processing.

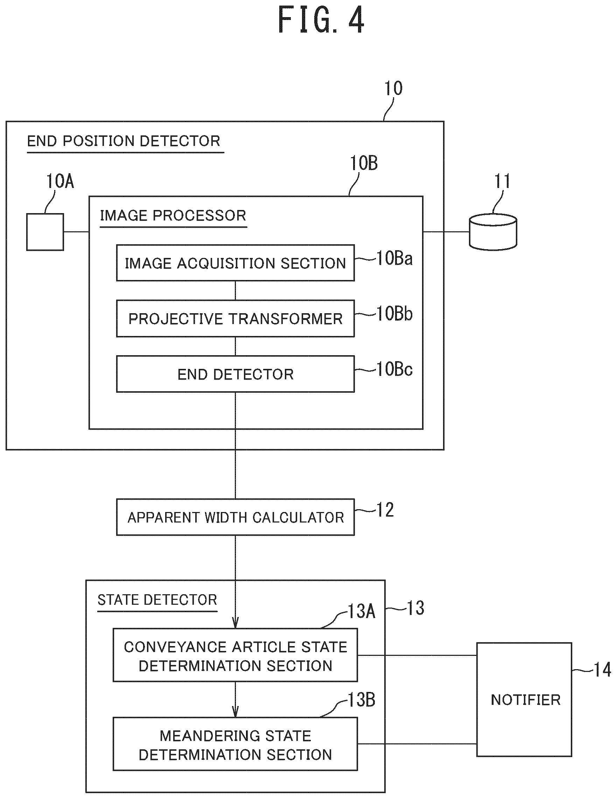

As illustrated in FIG. 4, the image processor 10B of the present embodiment includes an image acquisition section 10Ba, a projective transformer 10Bb, and an end detector 10Bc.

### [Image Acquisition Section 10Ba]

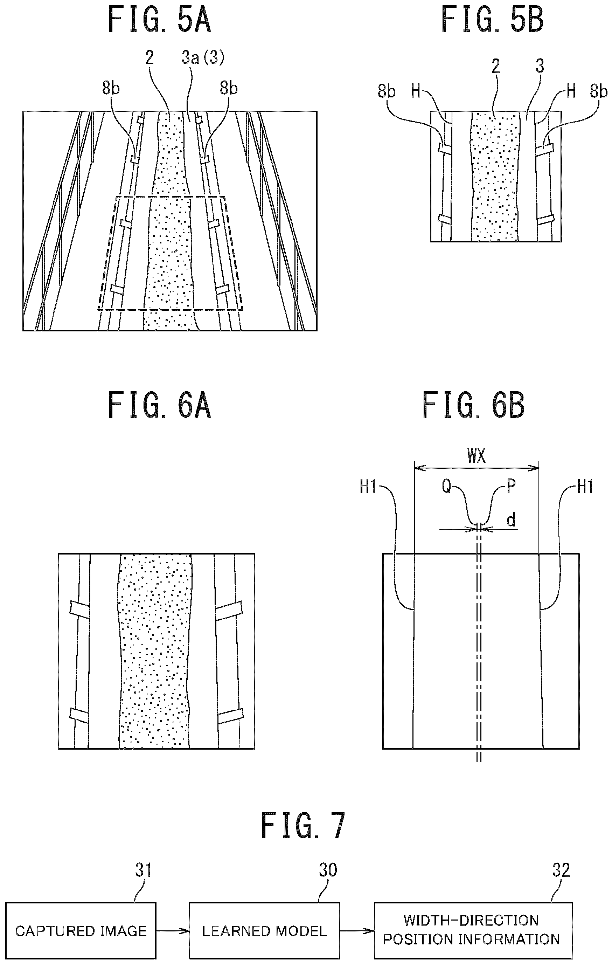

The image acquisition section 10Ba acquires, from the camera 10A, a captured image of the upper belt 3a which captured image is taken from above, as illustrated in FIG. 5A.

### [Projective Transformer 10BbJ

The projective transformer 10Bb performs projective transformation on the acquired captured image to transform it to an image of the belt 3 viewed from right above. For example, the projective transformer 10Bb specifies a region (a broken-line portion in FIG. 5A) the conveyance state of which is to be detected, from the captured image. The projective transformer 10Bb cuts the specified region and performs projective transformation thereon. The resultant transformed image is illustrated in FIG. 5B. Note that the specified region is set to include at least both ends of the belt 3 in the width direction.

The present embodiment deals with a case where the camera 10A is set in a state where the axis of the camera is inclined toward the downstream side in the conveyance direction. Even in this case, in the present embodiment, an image processing region is cut appropriately and subjected to the projective transformation, so that the image can be corrected to an image in which the belt 3 is viewed from right above (in a plan view). As a result, the ends of the belt 3 can be specified accurately.

Here assume a case where the imaging axis of the camera 10A is set toward right below to take an image of the belt 3 from right above (in a plan view) by the camera 10A. In this case, the captured imaged may not necessarily be subjected to projective transformation. However, even in a case where the camera 10A is provided with the imaging axis being directed toward right below, it is difficult to take all captured images with the same position and angle. In contrast, in a case where projective transformation is performed on images, even when the images are taken with any imaging positions and angles, all the captured images can be standardized. On this account, it is preferable to perform projective transformation.

### [End Detector 10BcJ

The end detector 10Bc detects positions H of both ends of the belt 3 in the width direction in the captured image after projective transformation.

The positions H of both ends of the belt 3 in the width direction can be specified by the following two processing methods, for example.

### [First Specifying Method]

In a first specifying method, a filtering process such as edge enhancement (binarization) is performed on data of the captured image to emphasize the outline of the belt 3. The first specifying method is a method of specifying the positions H of both ends of the belt 3 in the width direction by emphasis of the outline.

### [Second Specifying Method]

The second specifying method is a method using a learned model (neural network) calculated by deep learning or other machine learning. That is, the second specifying method is a method of specifying the positions H of both ends of the belt 3 in the captured image by use of a learned model.

In this case, the learned model for specifying the position of an end of the belt 3 on an image is generated. At the time of generating the learned model, multiple pieces of learning data, each constituted by a combination of a captured image taken in advance and information on a belt width-direction end position in the captured image, are prepared. When machine learning is performed by use of the multiple pieces of learning data in advance, the model is generated.

Each learning data is constituted by, for example, a combination of a captured image as illustrated in FIG. 6A and an image with clearly illustrated belt width-direction end positions H1, as illustrated in FIG. 6B, within the same region as the captured image. The captured image of FIG. 6A is data after projective transformation. The image with the clearly illustrated belt width-direction end positions H1, in FIG. 6B, is information on belt width-direction end positions. Note that the information on belt width-direction end positions does not need to be positions H1 themselves on a screen. The information on belt width-direction end positions may be values (coordinates) or the like indicative of width-direction positions in an image (in a region) in terms of the belt width-direction end positions.

Note that an image of learning data and an input image to a model may be captured images before projective transformation.

Machine learning is performed using learning data acquired under various conditions. A learned model which receives a captured image taken by the camera 10A as input data and which provides width-direction position information on both ends of the belt 3 in the width direction as output data is generated.

In the second specifying method, as illustrated in FIG. 7, a captured image 31 (data after projective transformation) taken by the camera 10A is input into a learned model 30. Hereby, information 32 on width-direction positions of both ends of the belt 3 in the width direction is acquired. From the acquired information 32, width-direction positions H of both ends in the width direction are specified.

In the second specifying method, the model 30 is created by use of a plurality of pieces of learning data different in time range and weather. Hereby, even in a captured image of the belt conveyor 1 provided outdoors such as a raw-material yard, the ends of the belt 3 can be detected stably.

As the machine learning, a technique such as semantic segmentation may be employed. In this case, for example, a learned model is generated such that teacher image data labelled per pixel is learned by convolutional neural network in terms of an edge portion and a non-edge portion in an end of the belt in the width direction. Further, other well-known methods may be employed as the learning method.

Here, the width-direction positions of both ends of the belt 3 in the width direction are specified preferably by the second specifying method. The width-direction positions may be specified by a photoelectric sensor or other range finders like PTL 1 or 2.

### <Apparent Width Calculator 12>

The apparent width calculator 12 performs processing to calculate an apparent width WX that is the width of the belt 3 in a top view, based on right and left width-direction positions of the belt 3 that are detected by the end position detector 10.

The following assumes a case where the right and left width-direction positions of the belt 3 are acquired as edge lines in a region as illustrated in FIG. 6B. In this case, the apparent width WX as the width of the belt 3 in a top view is calculated by specifying the width-direction positions of the edge lines.

Further, in a case where the right and left width-direction positions of the belt 3 are acquired in the form of coordinate values, the apparent width WX is calculated by addition and subtraction of the coordinate values.

### <State Detector 13>

As illustrated in FIG. 4, the state detector 13 includes a conveyance article state determination section 13A and a meandering state determination section 13B.

### [Conveyance Article State Determination Section 13A]

The conveyance article state determination section 13A performs a process of determining the conveyance state of the conveyance article conveyed by the belt 3 based on the calculated apparent width WX.

The conveyance article state determination section 13A determines the presence or absence of the raw material 2 on the belt 3, for example, based on the length of the calculated apparent width WX relative to an actual length W0 of the width of the belt 3. For example, in a case where the length of the calculated apparent width WX is less than a threshold A, the conveyance article state determination section 13A determines that the raw material 2 is loaded on the belt 3. The threshold A is a value set in advance as a value shorter than the actual length W0 of the width of the belt 3.

Here, as described above (see FIG. 3), the length of the apparent width WX of the belt 3 is relatively short in a case (FIG. 3C) where the raw material 2 is being conveyed in comparison with a case (FIG. 3B) where no raw material 2 is conveyed. This is because a central portion of the belt 3 sinks and curves due to the weight of the raw material 2 during conveyance of the raw material 2. Accordingly, when the threshold A based on which the raw material 2 can be determined to be on the belt 3 is acquired in advance, it is possible to determine whether or not the raw material 2 is conveyed by the belt 3.

Further, the length of the apparent width WX of the belt 3 becomes shorter as the amount of loading of the raw material 2 is larger (its weight is heavier). Accordingly, when the relationship between the apparent width WX and the amount (weight) of the raw material 2 is calculated in advance, for example, it is possible to estimate the conveyance amount of the raw material 2 based on the apparent width WX of the belt 3. This also allows management (e.g., adjustment) of the conveyance amount of the raw material 2 in accordance with the estimated conveyance amount of the raw material 2.

Here, in the above description, the length of the calculated apparent width WX relative to the actual length of the width of the belt 3 is used. Further, the threshold A shorter than the actual length of the width of the belt 3 is used for the determination. However, the present invention is not limited to this. For example, the ratio of the length of the calculated apparent width WX to the actual length of the width of the belt 3 may be used. The presence or absence of the raw material 2 on the belt 3 may be determined based on the ratio. Particularly, in a case where the conveyance amount (the amount of loading) of the raw material 2 is estimated from the apparent width WX, it is preferable to use the ratio.

The conveyance article state determination section 13A supplies information on whether or not the raw material 2 is conveyed by the belt 3 or the conveyance amount (the amount of loading) of the raw material 2 to the notifier 14.

### [Meandering State Determination Section 13B]

The meandering state determination section 13B determines the misalignment amount of the belt 3 based on right and left width-direction positions detected by the end position detector 10.

For example, the meandering state determination section 13B calculates a deviation amount d of a central position Q between the right and left width-direction positions from a reference position P as illustrated in FIG. 6B. The reference position P is the position of a central portion of the belt 3 in the moving direction in a case where the belt 3 has no misalignment. In a case where the calculated deviation amount d exceeds a threshold B set in advance, it is determined that the belt 3 is largely misaligned. In the present embodiment, when the conveyance article state determination section 13A determines that the length of the apparent width WX is less than the threshold A and the belt 3 is largely misaligned, conveyance abnormality information is supplied to the notifier 14.

Here assume a case where the camera 10A is provided such that the center of a designated region in an image comes to the center of the belt 3 in the moving direction in a case where the belt 3 has no misalignment. In this case, the reference position P (the central position of the facility) of a region of FIG. 6 overlaps with the central position Q of the belt 3 in the width direction.

### <Notifier 14>

When the notifier 14 acquires conveyance abnormality information on the belt 3 from the meandering state determination section 13B, the notifier 14 performs a notification process of displaying the conveyance abnormality information on a screen monitored by an operator, for example. Further, the notifier 14 performs an alarm generation process or a notification process such as transmission of an E-mail. Hereby, the operator in a factory can be notified of a conveyance abnormality of the belt 3.

Further, the notifier 14 displays information from the conveyance article state determination section 13A on the screen monitored by the operator. Note that the conveyance information from the conveyance article state determination section 13A is not necessarily warning information.

### (Operation and Others)

Generally, it is difficult to directly detect the raw material 2 (a conveyance article) from a captured image of the belt 3. However, in the present embodiment, it is possible to easily determine whether the raw material 2 is conveyed or not, based on the apparent width WX of the belt 3. This makes it possible to easily and accurately determine the presence or absence of the raw material 2. Hereby, it is possible to detect a conveyance abnormality state in which no raw material 2 is loaded even though the raw material 2 should be conveyed. Note that notification about whether or not the raw material 2 is conveyed may not be notified.

Further, in the present embodiment, in a case where the apparent width WX of the belt 3 is less than the threshold A, it is determined that a conveyance abnormality occurs. That is, in a case where the raw material 2 is loaded on the belt 3 and the misalignment amount of the belt 3 (the deviation amount d of the central position) exceeds the threshold B, it is determined that a conveyance abnormality occurs. In the meantime, in the present embodiment, even in a case where the misalignment amount of the belt 3 (the deviation amount d of the central position) exceeds the threshold B, when the apparent width WX of the belt 3 is equal to or more than the threshold A, it is determined that no conveyance abnormality occurs. That is, in a case where no raw material 2 is on the belt 3, it is determined that no conveyance abnormality occurs. As such, in the present embodiment, it is determined whether or not the misalignment amount of the belt 3 is abnormal based on the determination on whether or not the raw material 2 is conveyed.

Accordingly, in the present embodiment, the operator can be notified of only the misalignment of the belt 3 as the conveyance abnormality of the raw material 2 during conveyance. The operator can grasp the conveyance abnormality in the belt as distinguished from an insignificant misalignment of the belt 3 in a state where no raw material 2 is conveyed. The state where no raw material 2 is conveyed is an unsteady conveyer operation state before and after start or end of conveyance, for example. This makes it possible to effectively monitor belts 3 of multiple conveyers. As a result, in the present embodiment, it is possible to change process requirements to prevent misalignment of the belt 3 or to take corrective measures to a conveyance abnormality by checking the facility at an early stage. Thus, in the present embodiment, it is possible to prevent a serious trouble.

As described above, in the present embodiment, an imaging device is provided in the belt conveyor 1 to continuously monitor the belt 3. When the captured image is processed to detect ends of the belt 3 in the width direction, for example, it is possible to efficiently detect misalignment of the belt 3 as a conveyance abnormality. As a result, in the present embodiment, it is possible to take effective measures before a serious facility trouble occurs. Further, it is possible to prevent a production loss or a facility failure.

Further, in the present embodiment, it is possible to easily and accurately determine the presence or absence of a conveyance article based on a change in belt width. Accordingly, it is possible to grasp a conveyance abnormality such as the misalignment amount of the belt 3 during conveyance of the conveyance article after it is determined whether the conveyance article is conveyed or not. On this account, it is possible to take measures such as changing of process requirements or inspection or repair of the facility before a facility trouble occurs.

Here, the present embodiment deals with a raw material constituted by bulk material as a conveyance article, but the present invention is also applicable to a conveyance article other than the bulk material.

### (Others)

This disclosure can also take the following configurations.
(1) A belt conveyance state detection device for detecting a conveyance state of a belt of a belt conveyor configured to convey a conveyance article includes: an end position detector configured to detect respective width-direction positions of both ends of the belt in a width direction in a top view; an apparent width calculator configured to calculate an apparent width as a width of the belt in the top view, based on the width-direction positions detected by the end position detector; and a state detector configured to determine a conveyance state of the conveyance article conveyed by the belt, based on the calculated apparent width.
(2) The state detector determines at least presence or absence of the conveyance article on the belt out of the presence or absence of the conveyance article and a loading amount of the conveyance article, based on a length of the calculated apparent width relative to an actual length of a width of the belt.
(3) In a case where the length of the apparent width thus calculated is less than a threshold set in advance as a value shorter than the actual length of the width of the belt, the state detector determines that the conveyance article is on the belt.
(4) The state detector further determines a misalignment amount of the belt, based on the detected width-direction positions of both ends of the belt in the width direction.
(5) The belt conveyance state detection device further includes a notifier configured to notify conveyance abnormality information on the belt in a case where the state detector determines that the conveyance article is on the belt and the belt is largely misaligned.
(6) The end position detector includes: an imaging device configured to take a captured image of the belt from above; and an image processor configured to detect respective width-direction positions of both ends of the belt in the width direction from the captured image taken by the imaging device.
(7) The image processor detects the respective width-direction positions of both ends of the belt in the width direction from the captured image after projective transformation.
(8) The image processor detects the respective width-direction positions of both ends of the belt in the width direction from the captured image taken by the imaging device, by use of a learned model configured to specify belt end positions on an image, the learned model being a model obtained by machine learning by use of a learning data constituted by a combination of a captured image taken in advance and information on belt width-direction end positions in the captured image.
(9) A belt conveyance state detection method for detecting a conveyance state of a belt of a belt conveyor configured to convey a conveyance article includes determining a conveyance state of a conveyance article conveyed by the belt, based on a length of an apparent width as a width of the belt viewed in a top view relative to an actual length of the width of the belt.

Here, Japanese Patent Application No. 2022-034560 (filed on March 7, 2022) to which the present application claims priority is incorporated herein by reference in its entirety. Herein, the present invention has been described referring to a limited number of embodiments, but the scope of the present invention is not limited to them, and it is obvious for a person skilled in the art that the embodiments are modifiable based on the disclosure.

### Reference Signs List

- 1: belt conveyor
- 2: raw material (conveyance article)
- 3: belt
- 3a: upper belt
- 3b: lower belt
- 7: pulley
- 8: roller
- 8a: central roller
- 8b: right and left rollers
- 9: conveyance state detection device
- 10: end position detector
- 10A: camera
- 10B: image processor
- 10Ba: image acquisition section
- 10Bb: projective transformer
- 10Bc: end detector
- 12: apparent width calculator
- 13: state detector
- 13A: conveyance article state determination section
- 13B: meandering state determination section
- 14: notifier
- 30: learned model
- 31: captured image
- 32: information on width-direction position of belt width-direction end
- A: threshold
- B: threshold
- H: width-direction position
- P: reference position
- Q: central position of belt
- WO: actual length
- WX: apparent width
- d: misalignment amount

## Claims

1. A belt conveyance state detection device for detecting a conveyance state of a belt of a belt conveyor configured to convey a conveyance article, the belt conveyance state detection device comprising:
an end position detector configured to detect respective width-direction positions of both ends of the belt in a width direction in a top view;
an apparent width calculator configured to calculate an apparent width as a width of the belt in the top view, based on the width-direction positions detected by the end position detector; and
a state detector configured to determine a conveyance state of the conveyance article conveyed by the belt, based on the calculated apparent width.

2. The belt conveyance state detection device according to claim 1, wherein
the state detector determines at least presence or absence of the conveyance article on the belt out of the presence or absence of the conveyance article and a loading amount of the conveyance article, based on a length of the calculated apparent width relative to an actual length of a width of the belt.

3. The belt conveyance state detection device according to claim 2, wherein
in a case where the length of the apparent width thus calculated is less than a threshold set in advance as a value shorter than the actual length of the width of the belt, the state detector determines that the conveyance article is on the belt.

4. The belt conveyance state detection device according to claim 2 or 3, wherein
the state detector further determines a misalignment amount of the belt, based on the detected width-direction positions of both ends of the belt in the width direction.

5. The belt conveyance state detection device according to claim 4, further comprising:
a notifier configured to notify conveyance abnormality information of the belt in a case where the state detector determines that the conveyance article is on the belt and the belt is largely misaligned.

6. The belt conveyance state detection device according to any one of claims 1 to 5, wherein
the end position detector includes
an imaging device configured to take a captured image of the belt from above; and
an image processor configured to detect respective width-direction positions of both ends of the belt in the width direction from the captured image taken by the imaging device.

7. The belt conveyance state detection device according to claim 6, wherein
the image processor detects the respective width-direction positions of both ends of the belt in the width direction from the captured image after projective transformation.

8. The belt conveyance state detection device according to claim 6 or 7, wherein
the image processor detects the respective width-direction positions of both ends of the belt in the width direction from the captured image taken by the imaging device, by use of a learned model configured to specify belt end positions on an image, the learned model being a model obtained by machine learning by use of a learning data constituted by a combination of a captured image taken in advance and information on belt width-direction end positions in the captured image.

9. A belt conveyance state detection method for detecting a conveyance state of a belt of a belt conveyor configured to convey a conveyance article, the belt conveyance state detection method comprising:
determining a conveyance state of a conveyance article conveyed by the belt, based on a length of an apparent width as a width of the belt viewed in a top view relative to an actual length of the width of the belt.
